# EUROPÄISCHE PATENTSCHRIFT

(11) **EP 1 040 942 B1**
(45) Veröffentlichungstag und Bekanntmachung des Hinweises auf die Patenterteilung: **04.01.2006**
(21) Anmeldenummer: 00101630.2
(22) Anmeldetag: 28.01.2000
(51) Int. Cl.: B60C 27/08

(54) **Reifenkette und Verfahren zu ihrer Herstellung**
Tirechain and method of its manufacture
Chaine antidérapante et méthode de sa fabrication

(30) Priorität: 01.04.1999 DE 19915026
(43) Veröffentlichungstag der Anmeldung: 04.10.2000
(60) Teilanmeldung: 05023023.4
(73) Patentinhaber: OBERLAND-Schneeketten Anton Mangold, 82467 Garmisch-Partenkirchen (DE)
(72) Erfinder: Mangold, Christian, 82467 Garmisch-Partenkirchen (DE)
(74) Vertreter: Lang, Friedrich

(56) Entgegenhaltungen:
- DE-A- 2 124 201
- DE-A- 2 533 837
- DE-A- 3 627 717
- DE-B- 1 009 512
- DE-C- 3 212 360
- GB-A- 2 000 088
- US-A- 1 650 302

## Beschreibung

Die vorliegende Erfindung betrifft eine Reifenkette nach dem Oberbegriff des Anspruchs 1 sowie ein Verfahren zu ihrer Herstellung nach dem Oberbegriff des Anspruchs 18.

Gattungsgemäße Reifenketten sind unter anderem aus der DE 32 12 361 C2, aus der DE 35 11 241 C2, aus der DE 297 19 672 U1, aus der DE 2 124 201 A und aus der DE 32 12 360 C1 bekannt. Allen diesen Reifenketten ist gemeinsam, dass im Betrieb, d. h., wenn sie auf dem Reifen eines in Fahrt befindlichen Fahrzeuges oder eines anfahrenden Fahrzeuges montiert sind, durch Greifstege verursachte Quetschkräfte auf das horizontale Kettenglied auftreten, was zu einem entsprechenden Verschleiß führt. Bei den Greifstegen selbst besteht die Gefahr des Kippens gegenüber den horizontalen Kettengliedern. Weiterhin tritt bei den Greifstegen Verschleiß auf an demjenigen Teil ihrer Oberfläche, der der Fahrbahn zugewandt ist. Darüber hinaus ist die Traktionsfähigkeit der Reifenkette trotz Verbesserung gegenüber einer Reifenkette ohne Greifstege beschränkt, was sich in besonders schwierigem Gelände nachteilig auswirkt. So zeigt beispielsweise die DE 2 124 201 A eine Reifenkette mit lose auf horizontalen Kettengliedern angeordneten Stützgliedern deren äußerer Querschnittsbereich im Vergleich zum Querschnitt in der Horizontalebene des horizontalen Kettengliedes einen vergrößerten Querschnitt aufweisen kann. Das Stützglied umgreift jeweils ein Horizontalglied und weist zur Abstützung eine durch das Horizontalglied verlaufende Nase auf. Die DE 32 12 360 C1 offenbart ein Verfahren zum Herstellen von Reifenketten, bei dem auf Horizontalgliedern aufsitzende Stützglieder dadurch hergestellt werden, dass ein U-förmiges Unterteil in ein Horizontalglied eingelegt und anschließend mit einem stabförmigen Oberteil mittels Widerstandsstumpfschweißens verbunden wird. Dadurch entsteht ein das Horizontalglied umgreifendes Stützglied.

Aufgabe der vorliegenden Erfindung ist es, eine Reifenkette der eingangs genannten Art sowie ein Verfahren zu ihrer Herstellung anzugeben, die einfach herzustellen ist, die einem verminderten Verschleiß unterliegt und bei der die Traktionsfähigkeit verbessert ist.

Diese Aufgabe wird für die Reifenkette gemäß den Merkmalen des Anspruchs 1 und für das Verfahren gemäß den Merkmalen des Anspruchs 18 gelöst. Vorteilhafte Ausbildungen sind in den Unteransprüchen angegeben.

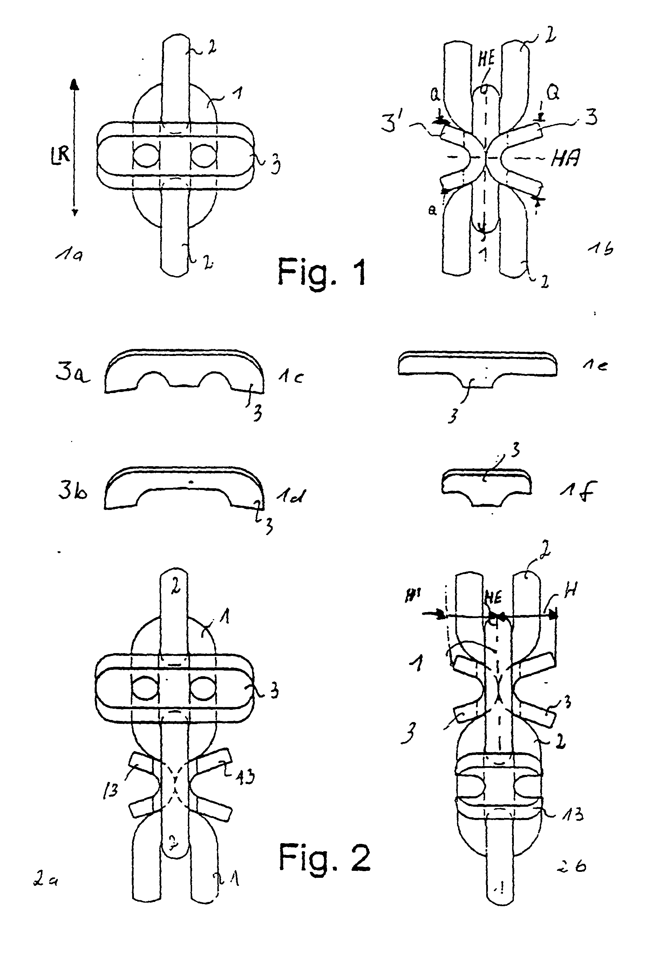

Die Erfindung wird nachstehend anhand der Zeichnung näher erläutert. Diese Zeichnung besteht aus den Figuren 1 bis 16, wobei die Figuren 1 bis 8 und 11 bis 16 noch unterteilt sind in Unterfiguren mit den Zusatzbezeichnungen a, b, c, ggf. auch weitere Buchstaben. Dieser Unterteilung liegt bezüglich der Figuren 1 bis 7 und 12 bis 16 folgende Systematik zugrunde:

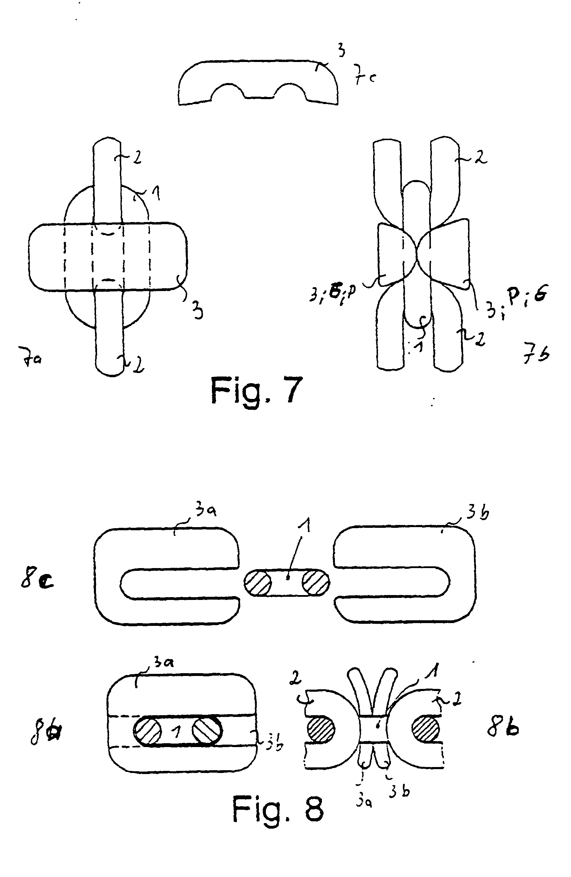

Die Unterfiguren mit der Zusatzbezeichnung "a" zeigen stets "Blickrichtung auf ein horizontales Kettenglied". Die Unterfiguren mit den Zusatzbezeichnungen "b" stehen stets für "Blickrichtung auf ein vertikales Kettenglied", d. h., die Ansicht ist um 90° gegenüber der entsprechenden Unterfigur mit der Zusatzbezeichnung "a" gedreht. Die weiteren Unterfiguren c, d, usw. zeigen jeweils ausxhnittsweise Teile von Greifstegen beziehungsweise eine andere Darstellung der jeweiligen Unterfigur "b". Auch bei Figur 8 zeigen die Unterfiguren a und b Ansichten, welche um 90° gegeneinander gedreht sind; die Unterfigur 8c zeigt Einzelheiten.

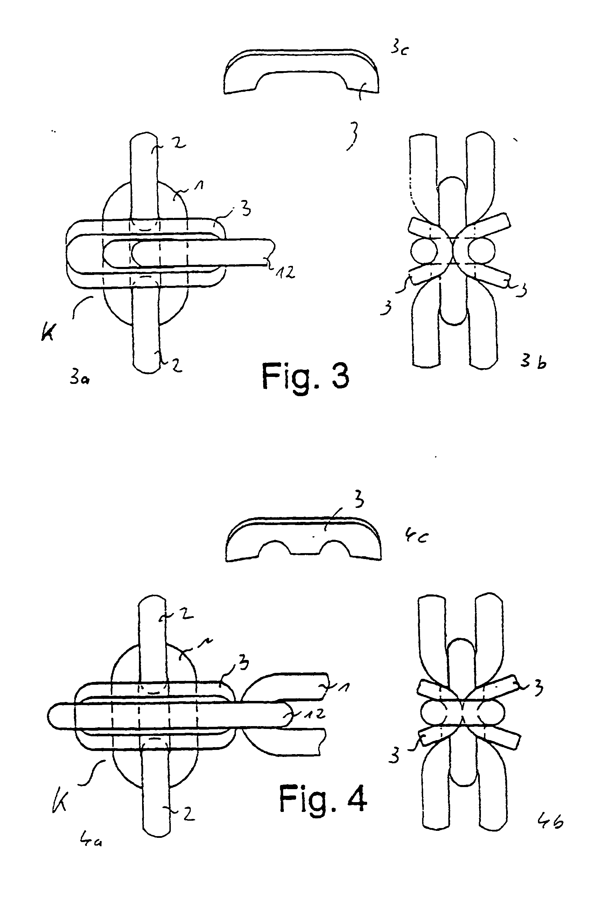

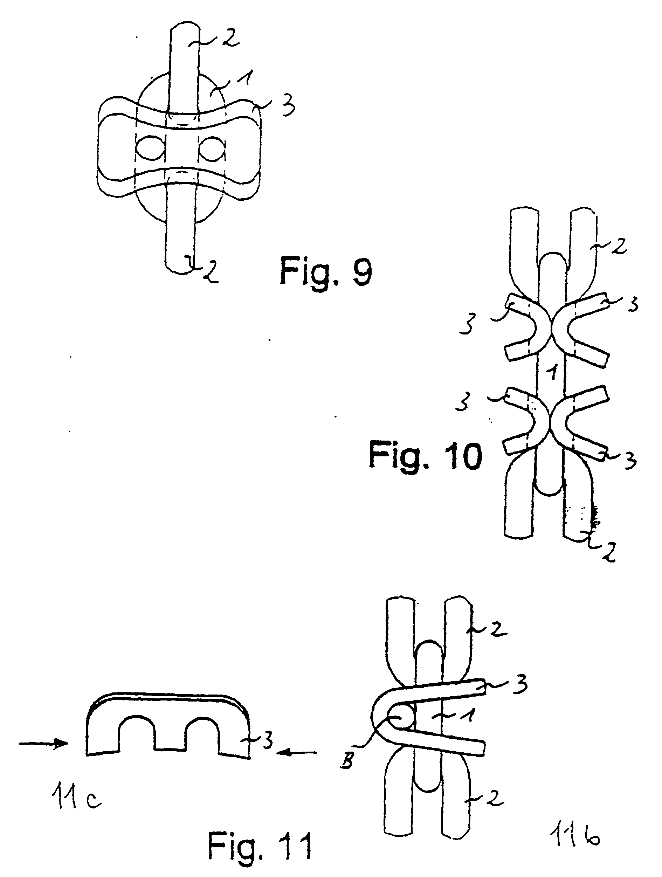

Die Figuren 1, 2, 7, 8, 10 und 11 bis 16 zeigen verschiedene Ausführungsformen der Erfindung. Die Figuren 3 bis 6 zeigen verschiedene Ausführungsformen der Erfindung bei einem Knotenpunkt der Reifenkette.Figur 9 zeigt eine Ausführungsform eines Greifstegs.

Figur 1 zeigt ausschnittsweise einen Teil einer erfindungsgemäßen Reifenkette, nämlich zwei vertikale Kettenglieder 2, ein diese verbindendes horizontales Kettenglied 1 sowie zwei Greifstege 3 mit jeweils V-förmigem Querschnitt. Wenn man nun gedanklich unterstellt, dass diese Reifenkette auf einen Reifen aufgezogen sei, so zeigt Figur 1a den dargestellten Ausschnitt der Reifenkette in der Draufsicht auf die Lauffläche des Reifens, während Figur 1b eine demgegenüber um 90° gedrehte Sicht zeigt, nämlich eine Sicht quer zum Reifen und parallel zu seiner Lauffläche. Figur 1a zeigt die Anordnung der Greifstege 3 quer zur Längsrichtung LR der Reifenkette, d.h., quer zur Ablaufrichtung des (gedachten) Reifens.

Figur 1b zeigt, dass die Figur 1 insgesamt bereits mehrere vorteilhafte Ausbildungen der erfindungsgemäßen Reifenkette aufweist. Zum einen sind zwei Greifstege 3 mit V-förmigem Querschnitt dargestellt und nicht nur ein einziger (was als solches auch möglich ist), wobei die Schenkel des einen Greifsteges 3 der Straßen- bzw. Untergrundseite zugewandt ist (bei Montage auf ein Rad) und die Schenkel des anderen Greifsteges 3' (welcher optional ist) der Lauffläche des Rades. Insgesamt ergibt sich auf diese Weise ein im wesentlichen X-förmiger Querschnitt. Diese beiden Greifstege 3 sind so angeordnet, dass der eine Greifsteg 3 (im Blick auf die Figur 1b: der nach rechts zeigende Greifsteg 3) bezüglich der Horizontalebene HE des horizontalen Kettengliedes 1 eine größere Höhe H aufweist, als die benachbarten vertikalen Kettenglieder 2. Dieses Maß H ist, lediglich aus Gründen der Übersichtlichkeit, zwar in Figur 1b nicht eingezeichnet; es ist jedoch in Figur 2b dargestellt. Dies hat den besonderen Vorteil, dass dieser Greifsteg 3 bei Einsatz in schwierigem Untergrund mehr Kräfte aufnehmen bzw. übertragen kann als wenn er gleich hoch wäre wie die benachbarten vertikalen Kettenglieder 2. Figur 1b zeigt weiterhin ein Merkmal, welches allen Ausführungsformen gemeinsam ist und welches eine wesentliche Idee bei der vorliegenden Erfindung ist: Der Greifsteg 3 weist, im Querschnitt betrachtet, wie er in Figur 1b vorliegt, einen Querschnitt Q auf, welcher von der Horizontalebene HE des Horizontalen Kettengliedes 1 aus zunimmt entlang der Hochachse HA des horizontalen Kettengliedes 1, bis er am (vertikalen) Ende des Greifsteges 3 am größten ist. Dies hat den großen Vorteil, dass sich der Greifsteg 3 beim Abrollen eines Reifens samt der erfindungsgemäßen Reifenkette auf einem schwierigen Untergrund (z.B. Fahrbahn mit Schnee, Eis oder mooriges Gelände) stets optimal mit der Fahrbahn bzw. dem Untergrund "verzahnen" kann, wodurch sich ein Maximum an Traktion ergibt.

Weiterhin zeigt Figur 1 bei der Teilfigur 1b, dass die erfindungsgemäße Reifenkette einen zweiten Greifsteg 3 aufweisen kann, welcher quasi entgegengesetzt zum einen Greifsteg 3 angeordnet ist, d. h. dass er so angeordnet ist, dass sein zunehmender Querschnitt Q sich in eine zur ersten Richtung der Hochachse HA des horizontalen Kettengliedes 1 entgegengesetzte Richtung erstreckt. Diese beiden Greifstege 3 sind miteinander mechanisch fest verbunden, z. B. mittels Schweißen. Sie können aber auch, sei es zusätzlich dazu oder statt dessen, mit dem horizontalen Kettenglied 1 verschweißt sein. Bei einer (nicht dargestellten) Ausführungsform einer Reifenkette mit nur einem einzigen Greifsteg 3 am horizontalen Kettenglied 1 ist der Greifsteg 3 mit dem horizontalen Kettenglied 1 verschweißt. Die Greifstege 3 können durch Schmieden geeigneter Werkstücke hergestellt sein. Sie können aber auch durch Stanzen aus einem Blechband hergestellt sein. Die beiden Greifstege 3 weisen eine bezüglich ihrer Längsachse gebogene Form auf, wie Figur 1 zu entnehmen ist. Der dazu notwendige Biegevorgang kann entweder vor dem Stanzen vorgenommen werden oder danach oder aber beim Schmieden. Aus der Teilfigur 1b ist auch ersichtlich, dass sich die beiden Greifstege 3 an ihren Außenseiten auf die vertikalen Kettenglieder 2 abstützen. Dies hat den besonderen Vorteil, dass die Quetsch- bzw. Scherkräfte, die auf das horizontale Kettenglied 1 (verursacht durch den Greifsteg 3) einwirken, bei der erfindungsgemäßen Reifenkette geringer sind als bei einer Reifenkette nach dem Stand der Technik.

Figur 1 zeigt in der Teilfigur 1b auch, dass der eine Greifsteg 3, welcher bei der Montage der Reifenkette auf einem Rad der Fahrbahnseite zugewandt ist (und welcher damit der Lauffläche des Rades abgewandt ist), eine größere Höhe H aufweist als der dem Rad zugewandte Greifsteg 3, jeweils von der Horizontalebene HE des horizontalen Kettengliedes 1 aus betrachtet. Dies hat den Vorteil, dass die Traktionsfähigkeit der Reifenkette größer ist als bei einer Reifenkette, bei der die von der Lauffläche eines Rades abgewandten Greifstege 3 nicht über die Höhe der benachbarten vertikalen Kettenglieder 2 hinaus reichen, während die der Radlauffläche zugewandten Greifstege 3 die Radlauffläche bezüglich Verschleiß optimal schonen, da sie maximal so hoch sind wie die benachbarten vertikalen Kettenglieder 2. Die Teilfiguren 1c bis lf zeigen Teilansichten verschiedener, möglicher Ausführungsformen von Greifstegen 3.

Figur 7 zeigt in Draufsicht (siehe Teilfigur 7a) und quer dazu (siehe Teilfigur 7b) Greifstege 3, welche aus einem Profildraht P hergestellt sind. Die Teilfigur 7c zeigt eine Teilansicht des Greifsteges 3.

Figur 8 zeigt in der Teilfigur 8a einen Greifsteg 3, welcher aus zwei Teilen 3a, 3b gebildet ist (siehe Teilfigur 8c), die vorzugsweise einander gleich sind. Teilfigur 8a zeigt eine Draufsicht auf den auf ein horizontales Kettenglied 1 aufgeschobenen Greifsteg 3, betrachtet entlang der Längsachse des horizontalen Kettengliedes 1. Die Teilfigur 8b zeigt eine Ansicht quer zur Ansicht nach Teilfigur 8a. Vorzugsweise sind die beiden Teile 3a, 3b miteinander verschweißt.

Figur 9 zeigt einen Greifsteg 3 in Draufsicht, welcher, entlang seiner Längsachse betrachtet, an seinen beiden Enden seitlich aufgebogen ist. Bei einer weiteren, nicht dargestellten Ausführungsform des Greifsteges 3 ist dieser lediglich an einem seiner beiden Enden seitlich aufgebogen. Durch dieses Aufbiegen ist die Aufstandsfläche des Greifsteges 3 auf eine Fahrbahn geringer als bei Ausführungsformen, welche nicht aufgebogen sind. Dieses trägt zur Schonung der Fahrbahn und zur Laufruhe bei.

Figur 2 zeigt in ihren Teilfiguren 2a, 2b eine weitere Ausführungsform der erfindungsgemäßen Reifenkette: Dabei weist zusätzlich das vertikale Kettenglied 2 Greifstege 13 auf. Dies hat den besonderen Vorteil, dass auf eine auf ein Rad montierte Reifenkette seitlich einwirkende Kräfte, wie sie z. B. bei Kurvenfahrten oder bei Montage auf Fahrzeuge mit Räumschildern auftreten können, durch die Reifenkette besser beherrschbar sind. Weiterhin wirkt dies verschleißmindernd bezüglich der Längsschenkel der vertikalen Kettenglieder 2.

Figur 10 zeigt eine Ausführungsform einer erfindungsgemäßen Reifenkette, bei der an einem horizontalen Kettenglied 1 nebeneinander jeweils zwei Greifstege 3 montiert sind in Richtung Fahrbahnseite und zwei Greifstege 3 in Richtung Radoberfläche. Eine solche Anordnung läßt sich dann verwenden, wenn die Länge des horizontalen Kettengliedes 1 mindestens das fünffache desjenigen Betrages beträgt, der dem Durchmesser der Kettenschenkel entspricht. Das Vorsehen von mehreren Greifstegen 3 entsprechend der Figur 10 bewirkt eine weitere Steigerung der Traktionsfähigkeit der Reifenkette.

Figur 11 zeigt in der Teilfigur 11b eine Ausführungssform mit nur einem einzigen Greifsteg 3 am horizontalen Kettenglied 1. Im Gegensatz zu den zuvor beschriebenen Ausführungsformen endet (bzw. beginnt) dieser Greifsteg 3 nicht am horizontalen Kettenglied 1, sondern er ist zu beiden Seiten desselben (1) angeordnet. Dabei nimmt der eingangs genannte Querschnitt Q des Greifstegs 3 von der Horizontalebene HE des horizontalen Kettengliedes 1 aus zu in der ersten Richtung der Hochachse HA, während er in einer zweiten Richtung, die der ersten Richtung entgegengesetzt ist(in Figur 11b: nach links), abnimmt. Auch bei dieser Ausführungsform stützt sich der Greifsteg 3 an den Schenkeln der benachbarten vertikalen Kettenglieder 2 ab mit denselben Vorteilen wie bereits beschrieben. Als Befestigungsmöglichkeit des Greifstegs 3 am horizontalen Kettenglied 1 sind mehrere Möglichkeiten gegeben. In Figur 11b ist dazu ein Bolzen B vorgesehen, der zwischen dem Greifsteg 3 und dem horizontalen Kettenglied 1 angeordnet ist. Eine sichere Befestigung des Greifstegs 3 am horizontalen Kettenglied 1 ist in Figur 11b durch Verschweißen des Bolzens B entweder mit dem Greifsteg 3 oder mit dem horizontalen Kettenglied 1 gegeben. Ergänzend dazu sind auch Schweißverbindungen zwischen den Greifstegen 3 und dem horizontalen Kettenglied 1 möglich. Es kann auch eine ausschließlich formschlüssige Fixierung des Bolzens B dadurch erreicht werden, dass seine beiden Enden aufgeweitet oder abgebogen werden. Alternativ dazu ist es auch möglich, den Bolzen B wegzulassen und den Greifsteg 3 mittels Quetschen seiner Schenkel an seinem einen Ende mit dem horizontalen Kettenglied 1 mechanisch fest zu verbinden. Figur 11c zeigt einen Teil, nämlich knapp die Hälfte, des Greifstegs 3. Die in Figur 11c angebrachten Pfeile deuten an, wo die Quetschkräfte anzusetzen sind, um die vorgenannte Quetsch- bzw. Klemmverbindung zu erzielen.

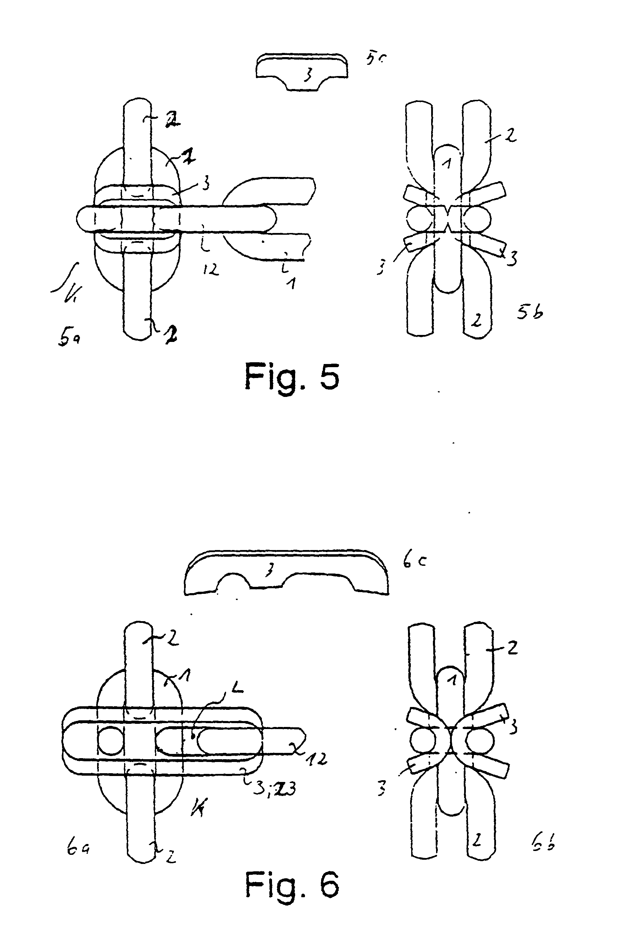

Die Figuren 3 bis 6 zeigen verschiedene Ausführungsformen der erfindungsgemäßen Reifenkette, bei denen der Greifsteg 3 auf einem horizontalen Kettenglied 1 an einem Knotenpunkt K der Reifenkette angeordnet ist. Die mit dem Buchstaben "a" bezeichneten Teilfiguren zeigen dies jeweils in Draufsicht, während die mit dem Buchstaben "b" bezeichneten Teilfiguren eine demgegenüber um 90° gedrehte Ansicht zeigen. Die Teilfiguren 3c, 4c, 5c und 6c zeigen jeweils Teilansichten der Greifstege 3. Bei der Ausführungsform nach Figur 3 ist ein am Knotenpunkt K abzweigendes vertikales Kettenglied 12 sowohl in das horizontale Kettenglied 1 wie auch in den zugehörigen Greifsteg 3 eingehängt. In den Ausführungsformen nach den Figuren 4 und 5 umfaßt ein am Knotenpunkt K abzweigendes vertikales Kettenglied 12 sowohl das horizontale Kettenglied 1 wie auch die zugehörigen Greifstege 3. Der Unterschied zwischen diesen beiden Ausführungsformen liegt in der Breite der verwendeten Greifstege 3: Bei Figur 4 ist der Greifsteg 3 länger als das horizontale Kettenglied 1 breit ist, während bei Figur 5 die Länge des Greifsteges 3 gleich der Breite des horizontalen Kettengliedes 1 ist. Bei den Ausführungsformen nach den Figuren 4 und 5 kann ein Verschweißen der Greifstege 3 mit dem horizontalen Kettenglied 1 im Bereich des Knotenpunkts K entfallen, da das vertikale Kettenglied 12 einen sicheren Sitz der Greifstege 3 auf dem horizontalen Kettenglied 1 bewirkt. Bei den Ausführungsformen nach den Figuren 4 und 5 ist es auch möglich, die gesamte Reifenkette mit den vorteilhaften Greifstegen 3 völlig ohne Schweißen an den Greifstegen 3 herzustellen, nämlich durch einfaches Umbiegen.

Bei der Ausführungsform nach Figur 6 ist der Greifsteg 3 als ein ein Langloch L aufweisender Greifsteg 23 ausgebildet. In dieses Langloch L ist das am Knotenpunkt K abzweigende vertikale Kettenglied 12 eingehängt. Das abzweigende vertikale Kettenglied 12 ist somit in einem vorgegebenen Winkel zu den vertikalen Kettengliedern 2 angeordnet. Bei Figur 6 beträgt dieser Winkel 90°.

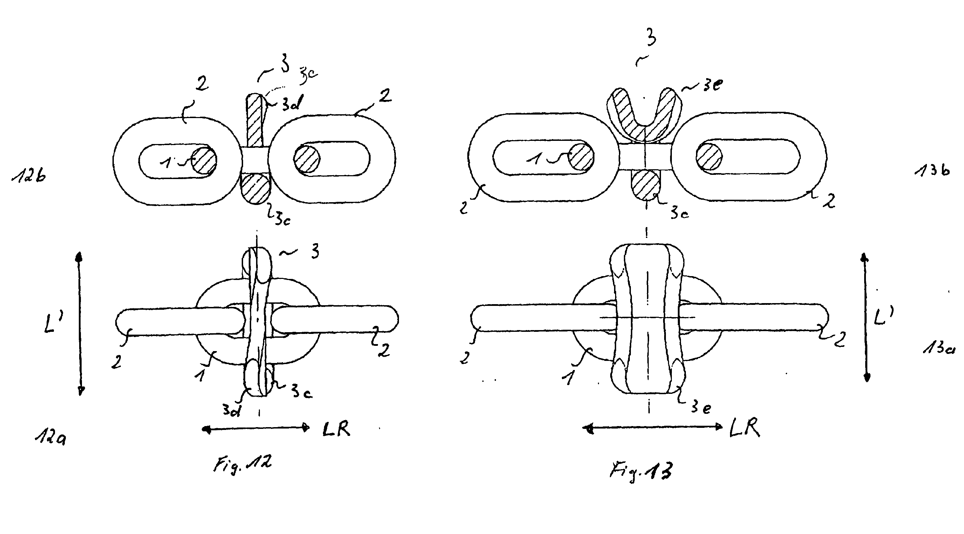

Figur 12 zeigt ein weiteres Ausführungsbeispiel einer erfindungsgemäßen Reifenkette. Bei dieser Ausführungsform ist der Greifsteg 3 zweiteilig ausgeführt, d. h. er besteht aus einem ersten U-förmigen Teil 3c und einem im Wesentlichen geraden zweiten Teil 3d, welches die freien Enden der U-Schenkel überbrückt und mit diesen verschweißt ist. Das erste Teil 3c weist einen runden Querschnitt auf. Es kann aus einem üblichen Kettenglied hergestellt sein, welches der Länge nach halbiert wurde. Das zweite Teil. 3d ist aus einem flachen Blechband hergestellt und in sich verschränkt. Die nach außen gerichtete Kante des Teils 3d weicht somit von einer Geraden ab und seine freien Enden 3e ragen aus der Bandebene heraus und verbessern somit die Greifeigenschaften. Die nach außen gerichteten Kanten weisen einen Winkel von bis zu 45° Grad zur Blechbandebene auf.

Bei einer nicht dargestellten Ausführungsform, die ähnlich der Ausführungsform nach Figur 12 ist, ist der gesamte Greifsteg 3 aus einem Blechband hergestellt, zu einem Greifsteg gebogen und mit sich selbst verbunden, beispielsweise mittels Schweißen, d. h. also, der Greifsteg 3 ist einstückig und er umschlingt das horizontale Kettenglied. Dabei ist der Greifsteg 3 in sich selbst verschränkt, analog dem zweiten Teil 3d nach Figur 12.

In der Ausführungsform nach Figur 13 ist der Greifsteg 3 ebenfalls zweiteilig ausgeführt mit einem ersten U-förmigen Teil 3c, welcher gleich sein kann dem ersten Teil 3c der Ausführungsform nach Figur 12. Das zweite Teil 3 ist aus einem Blechteil gebildet, welches einen im Wesentlichen V-förmigen Querschnitt aufweist, der sich nach außen hin, das heißt, von der Reifenkette weg, öffnet. Die beiden Teile 3c, 3e sind wiederum miteinander verbunden, beispielsweise mittels Schweißen. In Weiterbildung dieser Ausführungsform ist es vorteilhaft, wenn die beiden Enden des zweiten Teils 3e nach außen aufgeweitet sind, so dass dort der V-förmige Querschnitt weiter ist als im mittleren Bereich des zweiten Teils 3e.

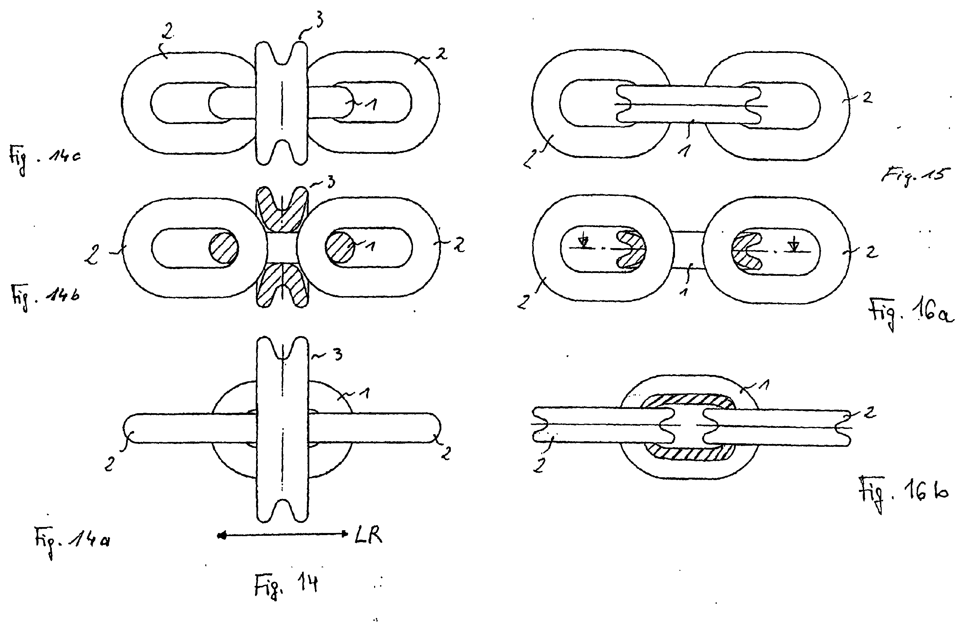

Bei der Ausführungsform nach Figur 14 ist der Greifsteg 3 einstückig ausgebildet aus einem Profildraht mit einem V-förmigen Querschnitt. Dabei ist der Profildraht zu einem Greifsteg 3 gebogen, welcher das horizontale Kettenglied 1 vollständig umschlingt. Bei den Ausführungsformen nach den Figuren 12 bis 14 weist die Reifenkette, auch wenn vorstehend nicht extra erwähnt, selbstverständlich außer dem Greifsteg 3 auch horizontale (1) und vertikale Kettenglieder 2 auf.

Figur 15 zeigt eine erfindungsgemäße Reifenkette, bei der das vertikale Kettenglied aus einem Profildraht gebildet ist, welches einen im Wesentlichen V-förmigen Querschnitt aufweist. Es ist zu einem geschlossenen Kettenglied gebogen, welches als vertikales Kettenglied in einem Kettenstrang integriert ist. Bei einem derartigen Kettenstrang sind beispielsweise allen vertikalen Kettenglieder in der beschriebenen Weise ausgebildet und die horizontalen Kettenglieder sind auf herkömmliche Weise aus Stahldraht mit rundem Querschnitt gebildet.

Bei der erfindungsgemäßen Reifenkette nach Figur 16 sind sowohl horizontale als auch vertikale Kettenglieder 2 aus einem Profildraht gebildet, welcher einen im wesentlichen V-förmigen Querschnitt aufweist und zu einem geschlossenen Kettenglied gebogen ist.

Die Ausführungsformen nach den Figuren 15 und 16 sind nicht auf Reifenketten ohne Greifstege beschränkt, auch wenn solche nicht dargestellt sind. Sie können selbstverständlich zusätzlich auch Greifstege aufweisen. Allerdings wurde auf deren Darstellung aus Gründen der Übersichtlichkeit verzichtet.

Bei einem ersten Herstellungsverfahren der erfindungsgemäßen Reifenkette wird der Greifsteg 3 durch entsprechendes Ablängen aus einem Profildraht P gewonnen, an das horizontale Kettenglied 1 angelegt, und mit einem von der anderen Seite des Kettengliedes 1 angelegten Gegenstück G mechanisch stabil verbunden, beispielsweise mittels Schweißen. Dieses Gegenstück K kann vorzugsweise ein weiterer Greifsteg 3 sein. Bei einem zweiten Herstellverfahren wird der Greifsteg 3 aus zwei Formteilen 3a, 3b hergestellt. Diese werden gegeneinander über das horizontale Kettenglied 1 geschoben und miteinander mechanisch stabil verbunden (z. B. mit Schweißen). Dadurch weist das horizontale Kettenglied 1 zwei Greifstege 3 auf. Vorteilhaft ist es, wenn die beiden Formteile 3a, 3b einander gleich sind.

Bei einem dritten Herstellverfahren wird der Greifsteg 3 aus einem Blechband gestanzt, geeignet um seine Längsachse gebogen, was zu einer Art V-förmigem Aussehen führt, und dann mit dem horizontalen Kettenglied 1 mechanisch stabil verbunden.

Bei einem vierten Herstellverfahren wird der Greifsteg 3 durch Schmieden eines geeigneten Werkstücks hergestellt und dann mit dem horizontalen Kettenglied 1 mechanisch stabil verbunden.

Bei diesen Herstellverfahren kann das mechanisch stabile Verbinden Von Greifsteg 3 und Kettenglied 1 bzw. 2 entweder mittels Schweißen oder, bei entsprechender Ausgestaltung der Greifstege 3, durch miteinander Verklemmen erfolgen.

Soweit bei den letzten beiden genannten Herstellverfahren auf der dem Greifsteg 3 gegenüberliegenden Seite des horizontalen Kettenglieds 1 ebenfalls ein Greifsteg 3 angeordnet wird, kann anstelle der Verbindung mit dem horizontalen Kettenglied 1 oder zusätzlich dazu eine mechanisch feste Verbindung der beiden Greifstege 3 miteinander vorgesehen werden.

Ein weiteres erfindungsgemäßes erfindungsgemäßen Verfahren zur Herstellung einer Reifenkette, wie sie beispielhaft in den Figuren 14 bis 16 dargestellt ist, besteht darin, dass Walzdraht zu einem Profildraht mit V-förmigem Querschnitt gezogen wird, und aus dem Profildraht die Greifstege (3) oder Kettenglieder gebogen werden.

Insgesamt weist die erfindungsgemäße Reifenkette folgende Vorteile gegenüber solchen nach dem Stand der Technik auf:
- weniger Verschleiß, da jeder an der vom Reifen abgewandten Seite der horizontalen Kettenglieder 1 angeordnete Greifsteg 3 Aufstandsflächen aufweist, die mit dem Untergrund (z. Fahrbahn, Schnee) in Kontakt treten;
- bessere Traktion, da der Greifsteg 3 immer im positiven Winkel zu seiner Wirkrichtung steht;
- bessere Verteilung der Belastung, dadurch höhere Laufruhe, geringerer Reifenverschleiß, geringere Fahrbahnabnutzung;
- die Greifstege 3 können nicht kippen, da sie sich seitlich auf die benachbarten vertikalen Kettenglieder 2 abstützen;
- geringere Bruchneigung durch Abstützung im Innenbereich der beiden Längsschenkel des horizontalen, ggf. auch des vertikalen Kettengliedes, insbesondere bei Kettengliedern, deren Länge mindestens das 3-fache des Durchmessers ihrer Schenkel beträgt;
- Montage der Greifstege auch auf vertikalen Kettengliedern möglich,
- bei Montage auf vertikale Kettenglieder bessere Aufnahme von auftretenden Querkräften;
- bei den Ausführungsformen nach den Figuren 3 bis 5 können an den Knotenpunkten K die gleichen Greifstege 3 verwendet werden wie bei den sonstigen horizontalen (ggf. auch vertikalen) Kettengliedern: Senkung der Herstellkosten durch mehr Gleichteile;
- bei einem Kettenglied können verschieden geformte Greifstege miteinander verschweißt werden;
- Verwendung mehrerer Greifstege pro Kettenglied nebeneinander, sofern die Kettenglieder eine Länge aufweisen, die mindestens fünfmal so groß ist wie der Durchmesser ihrer Schenkel.

## Patentansprüche

1. Reifenkette mit einem horizontalen (1) und wenigstens zwei vertikalen (2) Kettengliedern und mit einem am horizontalen Kettenglied (1) quer zu dessen Längsrichtung (L) angeordneten Greifsteg (3), wobei der Greifsteg vollständig aus massivem Material besteht,
**dadurch gekennzeichnet,**
**dass** der Greifsteg (3) aus einem Blechband gestanzt ist; und
**dass** der Greifsteg (3) V-förmig gebogen ist.

2. Reifenkette nach Anspruch 1,
**dadurch gekennzeichnet,**
**dass** der Greifsteg (3) mittels Schweißen mit dem horizontalen Kettenglied (1) zumindest mittelbar verbunden ist.

3. Reifenkette nach Anspruch 1 oder 2,
**dadurch gekennzeichnet,**
**dass** der Greifsteg (3) mit dem horizontalen Kettenglied (1) verklemmt ist.

4. Reifenkette nach einem der vorhergehenden Ansprüche,
**dadurch gekennzeichnet,**
**dass** der Greifsteg (3) auf einer Seite des horizontalen Kettengliedes (1) angeordnet ist und mit einem geeigneten Gegenstück (G), welches auf der anderen Seite des horizontalen Kettengliedes (1) angeordnet ist, mechanisch stabil verbunden ist.

5. Reifenkette gemäß Anspruch 4,
**dadurch gekennzeichnet,**
**dass** das Gegenstück (G) ein weiterer Greifsteg (3) ist.

6. Reifenkette nach einem der Ansprüche 1 bis 3,
**dadurch gekennzeichnet,**
**dass** zur Befestigung des Greifstegs (3) am horizontalen Kettenglied (1) entlang der Längsrichtung des Greifstegs (3) zwischen dem Greifsteg (3) und dem horizontalen Kettenglied (1) ein Bolzen (B) angeordnet ist.

7. Reifenkette nach einem der Ansprüche 1 bis 3,
**dadurch gekennzeichnet,**
**dass** der Greifsteg (3) aus zwei Teilen (3a, 3b) gebildet ist, die von beiden Seiten des horizontalen Kettengliedes (1) über dieses geschoben sind und die nach dem Schieben über das horizontale Kettenglied (1) miteinander verbunden sind.

8. Reifenkette nach einem der vorhergehenden Ansprüche,
**dadurch gekennzeichnet,**
**dass** sich der Greifsteg (3) mit seinen Außenseiten auf benachbarte vertikale Kettenglieder (2) abstützt.

9. Reifenkette nach einem der vorhergehenden Ansprüche,
**dadurch gekennzeichnet,**
**dass** der Greifsteg (3) in dem Bereich, in dem er nach Auflegen der Reifenkette auf einen Reifen von der Reifenoberfläche abgewandt ist, eine größere Höhe (H) aufweist, als benachbarte vertikale Kettenglieder (2), von der Horizontalebene (HE) des horizontalen Kettengliedes (1) aus betrachtet.

10. Reifenkette nach einem der vorhergehenden Ansprüche,
**dadurch gekennzeichnet,**
**dass** das horizontale Kettenglied (1) mehr als einen Greifsteg (3) aufweist.

11. Reifenkette nach einem der vorhergehenden Ansprüche,
**dadurch gekennzeichnet,**
**dass** der Greifsteg (3), in Längsrichtung betrachtet, an wenigstens einem seiner beiden Enden seitlich aufbogen ist.

12. Reifenkette nach einem der vorhergehenden Ansprüche,
**dadurch gekennzeichnet,**
**dass** der Greifsteg (3) an einem horizontalen Kettenglied (1) angeordnet ist, welches einen Knotenpunkt (K) der Reifenkette bildet.

13. Reifenkette nach Anspruch 12,
**dadurch gekennzeichnet,**
**dass** der Greifsteg (3) als ein Langloch (L) aufweisender Greifsteg (23) ausgebildet ist.

14. Reifenkette nach Anspruch 13,
**dadurch gekennzeichnet,**
**dass** im Langloch (L) des dieses aufweisenden Greifstegs (23) ein drittes, vertikales Kettenglied (12) eingehängt ist, welches in einem vorgegebenen Winkel zu den beiden anderen vertikalen Kettengliedern (2) verläuft.

15. Reifenkette nach einem der vorhergehenden Ansprüche,
**dadurch gekennzeiehnet,**
dass auch am vertikalen Kettenglied (2) mindestens ein Creifsteg (13) angeordnet ist.

16. Reifenkette nach Anspruch 15,
**dadurch gekennzeichnet,**
**dass** am vertikalen Kettenglied (2) mehr als ein Greifsteg (13) angeordnet ist.

17. Reifenkette nach Anspruch 15,
**dadurch gekennzeichnet,**
**dass** der Greifsteg (3, 13, 23) durch die Schenkel eines den Greifsteg (3, 13, 23) umschließenden Kettengliedes formschlüssig gehalten ist.

18. Verfahren zum Herstellen einer Reifenkette mit den Merkmalen nach einem der vorangegangenen Ansprüche,
**dadurch gekennzeichnet,**
**dass** zur Herstellung des Greifsteges (3, 13, 23) aus einem Blechband eine Platine gestanzt wird und dass diese Platine anschließend gebogen wird.

19. Verfahren nach Anspruch 18,
**dadurch gekennzeichnet,**
**dass** die Platine in der Weise gebogen wird, dass sich eine V-förmige Ausbildung des Greifstegs (3, 13, 23) ergibt.

20. Verfahren nach Anspruch 18 oder 19,
**dadurch gekennzeichnet,**
**dass** der Greifsteg (3) an eine Seite des horizontalen Kettengliedes (1) angelegt wird und er mit einem Gegenstück (G), welches auf der anderen Seite des horizontalen Kettengliedes angelegt wird, mechanisch stabil verbunden wird.

21. Verfahren nach Anspruch 20,
**dadurch gekennzeichnet,**
**dass** das Gegenstück (G) ein weiterer Greifsteg (3) ist.

22. Verfahren nach Anspruch 20 oder 21,
**dadurch gekennzeichnet,**
**dass** die mechanisch stabile Verbindung mittels Schweißens erfolgt.

23. Verfahren nach Anspruch 20 oder 21,
**dadurch gekennzeichnet,**
**dass** die mechanische stabile Verbindung durch Klemmen erfolgt.

24. Verfahren nach Anspruch 18 oder 19,
**dadurch gekennzeichnet,**
**dass** der Greifsteg (3) aus zwei Formteilen (3a, 3b) hergestellt wird, die gegeneinander über das horizontale Kettenglied (1) geschoben werden und dann miteinander mechanisch stabil verbunden werden.

## Claims

1. A tire chain with a horizontal (1) and at least two vertical (2) chain links and with a gripping stud (3) arranged on the horizontal chain link (1) transversally to its longitudinal direction (L), with the gripping stud consisting completely of massive material, **characterized in that** the gripping stud (3) is punched from a sheet metal strip, and that the gripping stud (3) is bent in a V-shaped manner.

2. A tire chain according to claim 1, **characterized in that** the gripping stud (3) is joined at last indirectly to the horizontal chain link (1) by means of welding.

3. A tire chain according to claim 1 or 2, **characterized in that** the gripping stud (3) is clamped with the horizontal chain link (1).

4. A tire chain according to one of the preceding claims, **characterized in that** the gripping stud (3) is arranged on one side of the horizontal chain link (1) and is mechanically joined in a stable manner to a suitable counterpart (G) which is arranged on the other side of the horizontal chain link (1).

5. A tire chain according to claim 4, **characterized in that** the counter-part (G) is a further gripping stud (3).

6. A tire chain according to one of the claims 1 to 3, **characterized in that** for fastening the gripping stud (3) a pin (B) is arranged on the horizontal chain link (1) along the longitudinal direction of the gripping stud (3) between the gripping stud (3) and the horizontal chain link (1).

7. A tire chain according to one of the claims 1 to 3, **characterized in that** the gripping stud (3) is formed of two parts (3a, 3b) which are pushed from both sides of the horizontal chain link (1) over the same and which are joined with each other after pushing over the horizontal chain link (1).

8. A tire chain according to one of the preceding claims, **characterized in that** the gripping stud (3) rests with its outsides on adjacent vertical chain links (2).

9. A tire chain according to one of the preceding claims, **characterized in that** the gripping stud (3) has a higher height (H) than adjacent vertical chain links (1) in the region in which it is averted from the tire surface after the tire chain is placed on a tire, as seen from the horizontal plane (HE) of the horizontal chain link (1).

10. A tire chain according to one of the preceding claims, **characterized in that** the horizontal chain link (1) comprises more than one gripping stud (3).

11. A tire chain according to one of the preceding claims, **characterized in that** the gripping stud (3) is laterally bent up at at least one of its two ends, as seen in the longitudinal direction.

12. A tire chain according to one of the preceding claims, **characterized in that** the gripping stud (3) is arranged on a horizontal chain link (1) which forms an intersecting point (K) of the tire chain.

13. A tire chain according to claim 12, **characterized in that** the gripping stud (3) is arranged as a gripping stud (23) comprising an oblong hole (L).

14. A tire chain according to claim 13, **characterized in that** a third vertical chain link (12) is hooked into the oblong hole (L) of the gripping stud (23) comprising the same, which vertical chain link extends at a predetermined angle relative to the other two vertical chain links (2).

15. A tire chain according to one of the preceding claims, **characterized in that** at least one gripping stud (13) is also arranged on the vertical chain link (2).

16. A tire chain according to claim 15, **characterized in that** more than one gripping stud (13) is arranged on the vertical chain link (2).

17. A tire chain according to claim 15, **characterized in that** the gripping stud (3, 13, 23) is held by the legs of a chain link encompassing the gripping stud (3, 13, 23).

18. A method for producing a tire chain with the features according to one of the preceding claims, **characterized in that** a blank is punched from a sheet metal strip for producing the gripping stud (3) and that said blank is thereafter bent.

19. A method according to claim 18, **characterized in that** the blank is bent in the manner that a V-shaped configuration of the gripping stud (3, 13, 23) is obtained.

20. A method according to claim 18 or 19, **characterized in that** the gripping stud (3) is placed on one side of the horizontal chain link (1) and is joined in a mechanically stable manner with a counter-part (G) which is placed on the other side of the horizontal chain link.

21. A method according to claim 20, **characterized in that** the counter-part (G) is a further gripping stud (3).

22. A method according to claim 20 or 21, **characterized in that** the mechanically stable joint is made by means of welding.

23. A method according to claim 20 or 21, **characterized in that** the mechanically stable joint is made by clamping.

24. A method according to claim 18 or 19, **characterized in that** the gripping stud (3) is made of two formed parts (3a, 3b) which are pushed against one another over the horizontal chain link (1) and are then joined to each other in a mechanically stable manner.

## Revendications

1. Chaîne pour pneus avec un maillon horizontal (1) et au moins deux maillons verticaux (2) et avec une barrette de prise (3) disposée sur le maillon horizontal (1) perpendiculairement à l'axe longitudinal (L) de celui-ci, laquelle barrette de prise se compose entièrement d'un matériau massif, **caractérisée en ce que** la barrette de prise (3) est découpée dans une bande de tôle et **en ce que** la barrette de prise (3) est recourbée en forme de V.

2. Chaîne pour pneus selon la revendication 1, **caractérisée en ce que** la barrette de prise (3) est reliée au moins indirectement par soudage au maillon horizontal (1).

3. Chaîne pour pneus selon la revendication 1 ou 2, **caractérisée en ce que** la barrette de prise (3) est fixée par serrage avec le maillon horizontal (1).

4. Chaîne pour pneus selon l'une quelconque des revendications précédentes, **caractérisée en ce que** la barrette de prise (3) est disposée sur un côté du maillon horizontal (1) et reliée de manière mécaniquement stable avec une contre-pièce (G) appropriée, qui est disposée de l'autre côté du maillon horizontal (1).

5. Chaîne pour pneus selon la revendication 4, **caractérisée en ce que** la contre-pièce (G) est une autre barrette de prise (3).

6. Chaîne pour pneus selon l'une quelconque des revendications 1 à 3, **caractérisée en ce qu'**un boulon (B) est prévu entre la barrette de prise (3) et le maillon horizontal (1) pour fixer la barrette de prise (3) sur le maillon horizontal (1) le long de l'axe longitudinal de la barrette de prise (3).

7. Chaîne pour pneus selon l'une quelconque des revendications 1 à 3, **caractérisée en ce que** la barrette de prise (3) se compose de deux parties (3a, 3b) qui sont emboîtées par-dessus le maillon horizontal (1) de part et d'autre de celui-ci et sont reliées entre elles après l'emboîtement par-dessus le maillon horizontal (1).

8. Chaîne pour pneus selon l'une quelconque des revendications précédentes, **caractérisée en ce que** la barrette de prise (3) s'appuie par ses faces extérieures sur des maillons verticaux (2) voisins.

9. Chaîne pour pneus selon l'une quelconque des revendications précédentes, **caractérisée en ce que** la barrette de prise (3) possède, dans la zone où elle s'éloigne de la surface du pneu après la pose de la chaîne pour pneus sur un pneu, une plus grande hauteur (H) que les maillons verticaux (2) voisins, par rapport au plan horizontal (HE) du maillon horizontal (1).

10. Chaîne pour pneus selon l'une quelconque des revendications précédentes, **caractérisée en ce que** le maillon horizontal (1) possède plus d'une barrette de prise (3).

11. Chaîne pour pneus selon l'une quelconque des revendications précédentes, **caractérisée en ce que** la barrette de prise (3), vue dans le sens longitudinal, est recourbée latéralement à l'une au moins de ses extrémités.

12. Chaîne pour pneus selon l'une quelconque des revendications précédentes, **caractérisée en ce que** la barrette de prise (3) est disposée sur un maillon horizontal (1) qui forme un noeud (K) de la chaîne pour pneus.

13. Chaîne pour pneus selon la revendication 12, **caractérisée en ce que** la barrette de prise (3) est conformée comme une barrette de prise (23) possédant un trou allongé (L).

14. Chaîne pour pneus selon la revendication 13, **caractérisée en ce qu'**il est prévu, accroché dans le trou allongé (L) de la barrette de prise (23) possédant celui-ci, un troisième maillon vertical (12) qui forme un angle prédéterminé par rapport aux deux autres maillons verticaux (2).

15. Chaîne pour pneus selon l'une quelconque des revendications précédentes, **caractérisée en ce qu'**il est prévu aussi au moins une barrette de prise (13) sur le maillon vertical (2).

16. Chaîne pour pneus selon la revendication 15, **caractérisée en ce qu'**il est prévu plus d'une barrette de prise (13) sur le maillon vertical (2).

17. Chaîne pour pneus selon la revendication 15, **caractérisée en ce que** la barrette de prise (3, 13, 23) est retenue par engagement positif par les bras d'un maillon entourant la barrette de prise (3, 13, 23).

18. Procédé pour la fabrication d'une chaîne pour pneus possédant les caractéristiques de l'une des revendications précédentes, **caractérisé en ce que** pour fabriquer la barrette de prise (3, 13, 23), une plaque est découpée dans une bande de tôle et cette plaque est ensuite pliée.

19. Procédé selon la revendication 18, **caractérisé en ce que** la plaque est pliée de manière à obtenir une forme de V pour la barrette de prise (3, 13, 23).

20. Procédé selon la revendication 18 ou 19, **caractérisé en ce que** la barrette de prise (3) est posée sur un côté du maillon horizontal (1) et reliée de manière mécaniquement stable avec une contre-pièce (G) qui est posée de l'autre côté du maillon horizontal.

21. Procédé selon la revendication 20, **caractérisé en ce que** la contre-pièce (G) est une autre barrette de prise (3).

22. Procédé selon la revendication 20 ou 21, **caractérisé en ce que** l'assemblage mécaniquement stable est obtenu par soudage.

23. Procédé selon la revendication 20 ou 21, **caractérisé en ce que** l'assemblage mécaniquement stable est obtenu par serrage.

24. Procédé selon la revendication 18 ou 19, **caractérisé en ce que** la barrette de prise (3) se compose de deux pièces mises en forme (3a, 3b) qui sont poussées l'une vers l'autre par-dessus le maillon horizontal (1) et assemblées ensemble de manière mécaniquement stable.
